# DEMANDE DE BREVET EUROPEEN

(11) **EP 2 359 680 A1**
(43) Date de publication de la demande: **24.08.2011**
(21) Numéro de dépôt: 11150638.2
(22) Date de dépôt: 11.01.2011
(51) Int. Cl.: A01G 9/02

(54) **Dispositif de culture végétale en hydroponie multicouche**

(30) Priorité: 16.02.2010 FR 1051077
(71) Demandeur: Jungle Art, 13510 Eguilles (FR)
(72) Inventeur: Ferrero, Jean-Christophe, 13510, Eguilles (FR)
(74) Mandataire: Domange, Maxime

(57) **Abrégé**

La présente invention concerne un dispositif de culture végétale (1) en hydroponie multicouche comprenant au moins une première couche (3) de matériau fibreux hydrophile comprenant un premier type de fibres dénommées premières fibres dont au moins une de ces 2 faces est appliquée sur une face d'au moins une deuxième couche (4) de matériau fibreux hydrophile comprenant un deuxième type de fibres dénommées deuxièmes fibres, ladite deuxième couche coopérant avec des moyens d'alimentation en eau, et ladite première couche étant plus épaisse et plus aérée à sec que ladite deuxième couche et présentant une capacité d'absorption d'eau supérieure et de préférence une rigidité supérieure à celle de la deuxième couche, et de préférence encore la densité volumique de la dite première couche étant inférieure à celle de la deuxième couche.

De préférence, le dispositif de culture selon l'invention comporte des poches (7) ouvertes (7b) aptes à contenir lesdites racines (10a) des végétaux, lesdites poches étant insérées à travers des découpes (8) réalisées dans lesdites deuxième et le cas échéant troisième couches, lesdites poches étant intercalées entre lesdites première et deuxième couches, lesdites poches comprenant un substrat (3a) de culture végétal.

## Description

La présente invention concerne un support de culture pour culture de végétaux en hydroponie. Plus particulièrement, l'invention concerne des supports de culture pour la culture de plantes sur une surface sensiblement verticale et notamment pour former un mur végétal ou un revêtement végétal de surface verticale telle qu'une façade.

On connaît 2 catégories de supports de culture verticaux.

La première catégorie décrite dans les brevets FR2725742, FR2857396 et FR2872381 dans lesquels on utilise comme substrat de culture de la terre ou de matériaux pulvérulents ou en vrac, de type terreau, sphaigne, roche minérale ou argile. Ce substrat de culture de matériaux inertes en vrac, notamment pulvérulent, est mis en oeuvre dans des bacs formant des jardinières, des sacs, des casiers ou des paniers grillagés, le cas échéant aptes à être assemblés entre eux et/ou fixés sur une paroi verticale.

L'inconvénient principal de cette première catégorie de support de culture réside dans le poids, la rigidité et le volume relativement importants de ces supports de culture et dans les problèmes de mise en oeuvre hors sol notamment sur une surface verticale qui en résulte.

Un autre problème de ce type de support de culture avec de la terre ou matériaux en vrac assimilés réside dans la consommation importante en eau nécessaire notamment dans le cas d'une implantation hors sol à cause du phénomène d'évaporation important lié entre autre au vent. Il en résulte que l'irrigation de ces systèmes qui se fait le plus souvent par arrosage automatique avec de l'eau chargée de fertilisants, contrôlée par un programmateur, requiert des quantités d'eau et d'énergie électrique importantes compte tenu des volumes de substrats pulvérulents mis en oeuvre. Il en résulte également que les eaux rejetées sont chargées en fertilisants chimiques ce qui entraine une pollution du milieu naturel. De plus ces matériaux se dégradent en particules fines.

Un autre problème est lié au tassement du matériau de par sa structure en vrac pulvérulente au cours du temps lequel requiert un binage régulier pour assurer son aération nécessaire au bon développement des plantes qui sont enracinées. Or, de par leur mise en oeuvre hors sol, notamment à une certaine hauteur sur les surfaces verticales, l'accès aux matériaux de substrat à l'intérieur de son récipient peut être rendu relativement difficile.

Enfin, les substrats de culture sont extraits de tourbières naturelles, entrainant l'assèchement des zones humides dans le monde et contribuant donc à la dégradation du milieu naturel, lesquelles ressources naturelles sont lentement renouvelables. La mise en oeuvre de ces substrats organiques peut également entrainer le développement de maladies phytosanitaires en leur sein.

Une autre catégorie de support de culture utilise un matériau inerte aggloméré de type fibre végétale ou synthétique tel que décrit dans les brevets FR2634971, FR2747265 et FR2923139. Ces supports de culture sont du type hors sol ou sans sol.

Ils sont composés de couches successives de nappes imputrescibles à pouvoir rétenteur d'eau entre lesquelles sont maintenues les racines des végétaux.

Ces systèmes, comme décrit dans le brevet FR2923139, sont susceptibles de fonctionner avec une alimentation en eau réalisée en circuit fermé : l'eau s'écoulant par gravité depuis le haut d'une dite nappe de support de culture disposée verticalement jusqu'à son extrémité inférieure au niveau de laquelle l'eau est connectée dans un bac avant d'être réinjectée en haut de la nappe de culture via des moyens de pompage.

Même si cette catégorie de support a l'avantage d'être moins encombrant et plus léger que les supports de culture de la première catégorie visée ci-dessus, elle est réservée à la mise en oeuvre par des professionnels et la manipulation des plantes en racines nues demande de nombreuses précautions et n'assure pas toujours un taux de reprise acceptable lors de l'implantation du végétal dans le support de culture.

Si ces dispositifs de culture hors sol permettent de consommer des quantités d'eau moins importantes que les dispositifs de culture sur sol, le brevet FR2923139 se propose de diminuer l'évaporation de l'eau assez importante compte tenu de l'installation hors sol, et ainsi de limiter davantage la consommation en eau en prévoyant la combinaison d'une couche médiane constituée d'une mousse synthétique de faible densité et d'une couche externe constituée par une membrane perforée réalisée en matériau synthétique. Dans le brevet FR2923139, le substrat de culture constitué d'un nappe imputrescible à pouvoir rétenteur d'eau est un feutre ou matériau (non tissé aiguilleté) de fibres hydrophiles.

De même dans le brevet FR2634971, on met en oeuvre une nappe imputrescible à fort pouvoir de rétention d'eau constituée d'un feutre à base de fibres de coton connu sous la dénomination « AQUANAPPE».

Un inconvénient de ces types de support de culture synthétique hors sol est leur relative fragilité et faible résistance mécanique sous le poids des végétaux qui leur sont accrochés.

Un autre inconvénient tient en ce que les éléments nutritifs contenus dans l'eau circulent avec l'eau et ne sont donc pas captés et stockés suffisamment longtemps dans le substrat de culture pour pouvoir être restitués ultérieurement à la plante de façon suffisamment prolongée comme requis. En effet, une plante ne peut pas absorber immédiatement les éléments nutritifs contenus dans l'eau en circulation et doit pouvoir en disposer de façon différée et prolongée dans le temps. Ces éléments nutritifs sont donc perdus pour la plante car emportés avec l'eau en circulation (cet effet est dit « effet de lessivage »).

Le but de la présente invention est de fournir un support de culture en hydroponie ou hors sol, amélioré qui permette de surmonter les inconvénients ci-dessus exposés et soit notamment capable de :
- permettre la culture de plantes en hydroponie partielle ou totale sur toute surface, support horizontal ou vertical, plane et courbe.
- être utilisée pour sa mise en oeuvre par des particuliers, pour sa facilité de plantation, d'entretien et la légèreté du support.
- assurer lors de la plantation sur le support de culture un meilleur taux de reprise des végétaux, et
- être d'avantage économe en eau et en énergie pour son fonctionnement.

Pour ce faire, la présente invention fournit un dispositif de culture végétale en hydroponie multicouche comprenant au moins une première couche de matériau fibreux comprenant un premier type de fibres dénommées premières fibres dont au moins une de ses 2 faces est appliquée sur et directement en contact avec une face d'au moins une deuxième couche de matériau fibreux , appelée couche d'irrigation, comprenant un deuxième type de fibres dénommées deuxièmes fibres, ladite deuxième couche coopérant avec des moyens d'alimentation en eau, et ladite première couche étant plus épaisse et plus aérée à sec que ladite deuxième couche et présentant une capacité d'absorption d'eau supérieure à celle de la deuxième couche, de préférence la densité volumique à sec de ladite première couche étant inférieure à celle de ladite deuxième couche.

Le dispositif selon l'invention est apte à recevoir les racines de végétaux introduites entre lesdites première et deuxième couches par l'intermédiaire de pré découpes réalisées à la surface et à travers ladite deuxième couche, ladite première couche constituant ainsi un substrat fibreux de culture. On sait que les plantes ont besoin pour se développer que leurs racines soient alimentées en eau et de préférence enrichies en éléments nutritifs et au moins partiellement aérées. A cet égard, la structure plus aérée à sec de ladite première couche est apte à permettre une meilleure pénétration et meilleur développement des racines en son sein et en constitue un substrat de culture.

On entend ici par « plus aéré à sec » que la proportion de volume vide dans ladite première couche est supérieure à celle de ladite deuxième couche.

On entend par « capacité d'absorption d'eau » la quantité d'eau pouvant être absorbée par ladite couche.

On comprend que ladite première couche présente une capacité d'absorption d'eau supérieure à celle de ladite deuxième couche en partie du fait du plus grand volume de vide qu'elle contient et surtout le cas échéant du volume interne des fibres creuses ou poreuses qu'elle contient.

En revanche, la capacité massique intrinsèque d'absorption d'eau de la deuxième couche (c'est-à-dire ici le poids d'eau absorbé par la couche par rapport au poids de la couche, c'est-à-dire le rapport : [poids d'eau absorbé par la couche] / [poids de la couche]) n'est pas nécessairement supérieure à celle de la première couche. On comprend toutefois que les rapport des capacités intrinsèques d'absorption d'eau des deux couches (en termes de poids d'eau absorbé par rapport au poids de la couche), rapport des épaisseurs respectives des deux couches et rapport des densités volumiques respectives des deux couches sont tels que la capacité d'absorption d'eau en termes de poids d'eau absorbé en absolu de la première couche est supérieure à celle de la deuxième couche.

Toutefois, de préférence, la première couche est plus épaisse et plus lourde que la deuxième couche. De même les densité volumique et capacité massique intrinsèque d'absorption d'eau de la première couche sont de préférence inférieures à celles de la deuxième couche.

Plus particulièrement, le rapport des épaisseurs de la première/deuxième couche est de 4 à 100 plus particulièrement de 10 à 40 et le rapport des densités volumiques de la première/deuxième couche est de 1/10 à 1 plus particulièrement de 1/5 à 1/2. Plus particulièrement, lesdites première et deuxième couches présentent des propriétés d'absorption d'eau, telles que leur capacité massique intrinsèque d'absorption en eau les rendent capables d'absorber plus de 2 fois, de préférence plus de 4 fois leurs poids en eau.

Lorsque l'on fait circuler dans ladite deuxième couche de l'eau, ou de préférence une solution nutritive c'est-à-dire une solution aqueuse contenant des éléments nutritifs assurant la croissance des végétaux tels que des sels minéraux en particulier de potassium et des composés de phosphore tels que des phosphates et des composés azotés tels que des nitrates, ladite deuxième couche absorbe de ladite solution aqueuse et la diffuse dans ladite première couche laquelle peut ainsi l'absorber par contact avec ladite deuxième couche.

Du fait de son contact avec ladite deuxième couche, et de sa plus grande capacité d'absorption d'eau notamment plus grande mouillabilité, ladite première couche est apte à capter l'eau de ladite deuxième couche lorsque cette dernière est imbibée d'eau, ladite première couche pouvant conserver toutefois même mouillée une texture, de préférence au moins partiellement aérée, apte à tenir en forme verticalement et à permettre un meilleur développement desdites racines.

Du fait de sa nature fibreuse, ladite deuxième couche absorbe ladite solution aqueuse de façon sensiblement homogène sur toute sa surface, et la diffuse de façon sensiblement homogène sur toute la surface de ladite première couche, la nature fibreuse de ladite première couche assurant une homogénéité de l'humidification de ladite première couche en dépit de son plus grand volume et plus grande porosité que ladite deuxième couche.

De préférence, ladite première couche présente une rigidité supérieure à celle de ladite deuxième couche. On entend ici par « rigidité supérieure » une meilleure tenue en forme, notamment en position verticale, de ladite première couche que celle de ladite deuxième couche.

En d'autres termes, la plus grande rigidité de ladite première couche permet d'en assurer une meilleure tenue mécanique, même mouillée, ainsi que le maintien de sa structure aérée en dépit de sa plus grande épaisseur, les premières fibres pouvant être maintenues espacées entre elles et ladite première couche étant ainsi aussi apte à absorber une plus grande quantité d'eau sans s'affaisser.

Enfin, de par sa plus grande rigidité ladite première couche se mouille plus lentement que la deuxième couche, mais inversement et avantageusement elle sèche aussi plus lentement c'est-à-dire que l'eau s'en évapore plus lentement et reste à disposition des racines plus longtemps.

Ladite deuxième couche alimentée en solution aqueuse nutritive ou en eau fait fonction de couche d'irrigation de ladite première couche, cette dernière par sa structure plus aérée et plus rigide constituant un réservoir de plus grand volume et maintenant l'eau à disposition des racines plus longtemps. Il en résulte une perte en eau diminuée avec des arrosages moins fréquents et un gain économique en termes d énergie consommé pour l'arrosage par rapport aux systèmes antérieurs à une seule couche de substrat fibreux.

La coopération desdites première et deuxième couches permet de constituer une plus grande réserve d'eau dans ladite première couche plus rapidement et donc d'éviter des pertes d'eau et permet d'éviter une humidification inhomogène qui se produirait sans le vecteur d'irrigation de ladite deuxième couche.

Ladite première couche permet ainsi de stocker la solution nutritive et de restituer aux racines, de manière prolongée dans le temps, l'eau et surtout les éléments nutritifs qu'elle contient sous la pression osmotique desdites racines. Et, du fait des propriétés de ladite première couche lorsque celle-ci est disposée en position verticale ou sensiblement verticale, l'eau reste stockée en son sein plus longtemps.

Un dispositif de culture selon l'invention peut être appliqué sur une surface de support à revêtir de végétaux, de préférence une surface étanche d'un support disposé verticalement ou sensiblement verticalement, plane ou courbe notamment un panneau. C'est, de préférence, le cas échéant, une face libre de ladite première couche qui est appliquée contre ladite surface.

La texture au moins partiellement aérée de ladite première couche lui confère alors en outre des propriétés d'isolation thermiques et phoniques particulièrement avantageuses dans le cas d'une application à titre de revêtement mural.

Toutefois dans un autre mode de réalisation, le dispositif de culture selon l'invention peut être appliqué à l'horizontal notamment directement sur un sol en particulier pour fournir une décoration végétale temporaire.

De préférence, lesdites premières et deuxièmes fibres des dites première et respectivement deuxième couches comprennent des fibres végétales. Les fibres végétales sont des fibres creuses ou poreuses présentant une hydrophilie élevée. On entend ici par « fibres poreuses » des fibres creuses remplies de matière poreuse c'est-à-dire contenant de la matière poreuse à l'intérieur d'une paroi formant un canal.

Plus particulièrement, ladite première couche comprenant des fibres végétales est plus rigide que ladite deuxième couche du fait que les lesdites premières fibres sont plus rigides, de préférence à paroi plus épaisse que les dites deuxièmes fibres, de préférence encore plus longues et/ou de plus grands diamètres que lesdites deuxièmes fibres ; et/ou ladite première couche est plus rigide ladite deuxième couche du fait que lesdites premières fibres sont liées entre elles par un liant.

La plus grande rigidité desdites premières fibres et/ou leur agglomération par un liant permet de les mettre en oeuvre sous forme de première couche plus épaisse tout en conservant une structure plus aérée que la deuxième couche. La plus grande rigidité desdites premières fibres contribue à la plus grande rigidité de ladite première couche en dépit de son plus grand volume et plus grande porosité que ladite deuxième couche.

L'eau diffuse vers ladite première couche par un phénomène supposé de percolation dans lesdites fibres creuses de ladite première couche assurant une homogénéité de l'humidification de ladite première couche en dépit de son plus grand volume et plus grande porosité que ladite deuxième couche.

La percolation de l'eau à travers les premières fibres creuses plus longues et/ou de plus grand diamètre que lesdites deuxièmes fibres permet à la première couche d'absorber l'eau de la deuxième couche avant que celle-ci n'ait le temps de ruisseler par gravitation en position verticale à la surface de la deuxième couche.

Plus particulièrement encore, dans le dispositif de culture végétale selon l'invention :
- ladite première couche est constituée d'une nappe semi-rigide de mélange de fibres végétales enchevêtrées de préférence liées entre elles par un liant organique, synthétique ou naturel, comprenant desdites premières fibres choisies parmi des fibres de chanvre, bambou, coco kenaf, jute, lin, abaca, sisal, et ramie, et
- ladite deuxième couche est constituée d'une nappe de matériau fibreux non tissé aiguilleté de fibres comprenant des fibres de coton éventuellement en mélange avec des fibres synthétiques de préférence fibres de polypropylène.

On comprend que le liant de ladite première couche assure une meilleure tenue mécanique du produit notamment sous forme de panneau de manière à ce qu'en particulier celui-ci ne s'affaisse pas en position verticale.

Plus particulièrement dans le dispositif de culture végétale selon l'invention :
- ladite deuxième couche présente une épaisseur de 1 à 10 mm et une capacité d'absorber de 2 à 5 fois son poids en eau, et
- ladite première couche présente une épaisseur de 40 à 100 mm et une capacité d'absorber de 2 à 4 fois son poids en eau.

Ces nappes d'aiguilleté de la deuxième couche encore appelées « feutres » sont connues de l'homme de l'art comme nappe d'irrigation dans le domaine de la culture végétale, c'est-à-dire comme ayant une fonction de rétention et diffusion homogène de l'eau placée dessous des substrats de culture en culture hors sol. On connait notamment une couche de feutre à base de coton recyclé est commercialisée sous l'appellation « AQUANAPPE», ainsi que des nappes d'aiguilleté constituées d'un mélange de fibres synthétiques notamment de polypropylène et de fibres naturelles notamment de coton, distribuées par la société ENVIROTISS (France) sous les marques, IRRINOV et IRRITHERM. Ces nappes d'aiguilleté de la deuxième couche présentent des capacités d'absorption de 2 à 5 fois leur poids en eau.

Dans un mode particulier de réalisation ladite première couche comporte un mélange de fibres végétales comprenant des premières fibres végétales choisies par des fibres de chanvre et un deuxième type de fibres végétales constitué de fibres de coton, de préférence plus de 50% en poids des dites fibres végétales étant desdites premières fibres, lesdites premières et deuxième fibres étant liées entre elles par un liant organique synthétique ou naturel de préférence un liant d'amidon de maïs ou de polyester en particulier sous forme de fibres de liant synthétique thermo fusible à base de polyester.

Des nappes sous forme de rouleaux ou de panneaux semi-rigides de mélange de fibres végétales de ce type sont commercialisées notamment par la société St Gobain sous la marque « FLORAPAN® » ou commercialisés par la société Technichanvre. Ces matériaux fibreux en nappe sont commercialisés sous l'appellation « LAINE DE CHANVRE ». Ils présentent une densité volumique de 20 à 50 kg/m3 particulièrement de 25 à 45 kg/m3.

Le liant organique donne au produit une certaine élasticité et sa cohésion. La présence des fibres de coton en mélange avec les fibres de chanvre accroit la souplesse du panneau.

Avantageusement, lesdites fibres végétales sont traitées contre la prolifération fongique pour minimiser les risques de dégradation dans le temps et leur conférer un certain caractère imputrescible.

Desdites premières couches de laine de chanvre présentent une capacité massique intrinsèque d'absorption d'eau de plus de 2 voire plus de 4 fois leur poids à sec en eau.

De préférence, ladite deuxième couche présente une capacité d'absorption d'eau plus rapide que ladite première couche c'est-à-dire qu'elle s'imbibe en eau plus rapidement, en partie cette propriété d'absorption plus rapide étant en partie liée à la plus grande rigidité de la première couche.

Dans un mode préféré de réalisation, au moins une desdites première et deuxième couches de préférence une face de ladite deuxième couche, est revêtue d'une troisième couche pare-vapeur perméable à l'air de préférence constituée d'un tissu synthétique micro perforé de préférence encore un tissus armé.

Il peut s'agir d'un tissu synthétique de type polypropylène microperforé.

Cette troisième couche externe a par sa structure une fonction de maintien mécanique des végétaux susceptible d'avoir tendance à s'arracher desdites première et deuxième couches entre lesquelles ils sont intercalés notamment en cas d'application en position verticale dudit dispositif de culture ainsi qu'une fonction de limitation de l'évaporation de l'eau en circulation , notamment le cas échéant dans ladite deuxième couche et enfin le cas échéant d'une fonction décorative.

Ladite troisième couche de finition permet en outre un accès de l'air aux racines à travers desdites deuxième et première couches.

Ladite troisième couche constitue en fin une couche de finition qui fait également office de protection contre les rayons solaires et protège les racines de l'exposition directe aux rayons UVA.

Avantageusement, ladite première couche comporte un additif de rétention d'eau en vrac sous forme de grains ou en poudre introduit au moins localement dans les interstices vides entre les fibres.

La capacité supérieure d'absorption d'eau de ladite première couche peut aussi provenir de la présence desdits additifs de rétention d'eau.

Ledit additif sont introduits dans ladite première couche au moins localement au niveau des zones d'implantation desdites racines.

Ces agents dénommés aussi agents mouillants ou rétenteur d'eau ou encore absorbants ont la propriété de restituer l'eau et les éléments fertilisants qu'ils ont absorbés sous la pression osmotique des racines.

On a découvert selon la présente invention que du fait de la porosité de la première couche celle-ci est apte à contenir et retenir en son sein un dit additif absorbant en grains ou pulvérisant.

Du fait que ladite première couche présente des propriétés de rétention de la solution nutritive nécessairement limitée notamment en position verticale de par la circulation par gravitation de la solution nutritive qu'elle renferme, la présence dudit additif de rétention d'eau pulvérulent ou granulaire contribue à augmenter la réserve utile d'éléments nutritifs au sein de ladite première couche.

Ledit adjuvant fixant les éléments fertilisants permet de les rendre disponibles pour les racines végétales de manière prolongée au cours du temps limitant ainsi l'effet de lessivage des éléments nutritifs lors de la circulation d'eau à travers ladite première couche.

Ledit additif absorbant permet donc d'espacer les fréquences d'arrosage et par conséquent d'économiser l'eau et l'énergie pour faire fonctionner le dispositif de culture végétale.

Ces additifs appliqués en vrac connus comme rétenteurs d'eau pour terreau et sol, sont par exemple commercialisés sous la marque « FERTISORB® » ou « AQUAMIX® » par la société FERTIL SA France.

Ces additifs sont notamment constitués de polymères super absorbants (SAP), notamment à base de copolymères de polyacrylates de sodium, formant un gel au contact de l'eau pouvant ainsi absorber jusqu'à 200 fois leur poids en eau, voire davantage.

Ces additifs sont connus pour augmenter la réserve utile des substrats de culture qui peuvent permettre d'absorber et de restituer jusqu'à 200 fois leur poids sec en eau permettant ainsi de réduire les fréquences d'irrigation et de limiter les pertes en eau et en éléments fertilisants dû aux lessivages.

On connaît aussi les additifs de ce type obtenus à partir d'algues ayant ces propriétés d'absorption et de fixateur d'engrais.

De préférence encore, un dispositif de culture selon l'invention comporte des poches ouvertes contenant ou aptes à contenir lesdites racines des végétaux, lesdites poches étant insérées à travers des découpes réalisées dans lesdites deuxième et le cas échéant troisième couches, lesdites poches étant intercalées entre lesdites première et deuxième couches, lesdites poches comprenant un substrat de culture végétal, lesdits végétaux sont de préférence pré cultivés dans lesdites poches avant l'insertion desdites poches dans lesdites découpes.

Lesdites poches sont particulièrement avantageuses en ce qu'elles permettent de développer lesdits végétaux avant leur implantation par introduction dans les fentes prédécoupées desdites deuxième et le cas échéant troisième couches et limiter ainsi le traumatisme de transplantation et augmenter le taux de reprise des végétaux après implantation.

Ce système offre en outre la possibilité de remplacer les plantes en retirant la poche et en lui substituant une nouvelle poche dans laquelle a été élevée une autre plante, pour l'entretien et/ou la rénovation des plantes.

Lesdites poches peuvent être par exemple composées de feutre maintenu plié en forme de cône dans lequel est incorporé du substrat de culture et un additif de rétention d'eau en vrac.

De préférence encore, l'enveloppe desdites poches ouvertes est constituée à partir du même matériau fibreux que ladite deuxième couche et comporte comme substrat de culture un même matériau que le matériau fibreux constitutif de la première couche, avec de préférence en son sein un additif de rétention d'eau en vrac sous forme de grains ou en poudre, de préférence encore le même que ladite première couche.

Ce mode de réalisation présente l'avantage de pouvoir acclimater la plante pendant sa période de culture et développement préalable à son implantation, aux mêmes conditions de culture que celles qu'elle rencontrera après son implantation dans ladite première couche procurant ainsi une meilleure adaptation et un développement optimal des végétaux et augmentant donc le taux de reprise des plante après implantation.

En pratique, on peut implanter de 10 à 40 plus particulièrement de 25 à 35 poches/m², régulièrement espacé sur la surface de ladite deuxième ou le cas échéant troisième couche externe de finition.

Dans un mode de réalisation particulier, le dispositif de culture végétal selon l'invention comprend des moyens d'alimentation en eau de préférence fixé sur une surface d'un support verticale contre laquelle est appliqué de préférence ladite première couche, lesdits moyens d'alimentation en eau étant aptes à alimenter en eau la partie supérieure de ladite deuxième couche et permettre ainsi une circulation de l'eau par gravité au sein de ladite deuxième couche et éventuellement au sein de ladite première couche, l'eau étant récupérée dans un réservoir disposé en partie inférieure ou dessous lesdites première et deuxième couche et ledit réservoir coopérant avec des moyens de pompage assurant la circulation en circuit fermé de l'eau entre ledit réservoir et lesdits moyens d'alimentation en eau dans la partie supérieure de ladite deuxième couche, et éventuellement dite première couche, lesdits moyens d'alimentation en eau comprenant de préférence un tuyau périphérique, ledit tuyau étant perforé au niveau de la partie supérieure au moins de ladite deuxième couche.

Plus particulièrement encore un dispositif de culture végétal selon l'invention comporte un support rigide ou souple sur lequel est fixé un complexe multicouche comprenant au moins lesdites première et deuxième couches et de préférence ladite troisième couche, et dans lequel sont implantés des végétaux, et dont les racines sont implantées entre lesdites première et deuxième couches et s'étendent dans la dite première couche de préférence dans des dites poches.

On comprend qu'une pluralité desdits panneaux assemblés côte à côte peut constituer une construction végétale, notamment un mur végétal.

Un support de culture selon la présente invention présente outre les avantages visés ci-dessus, des qualités d'isolation thermique et phonique.

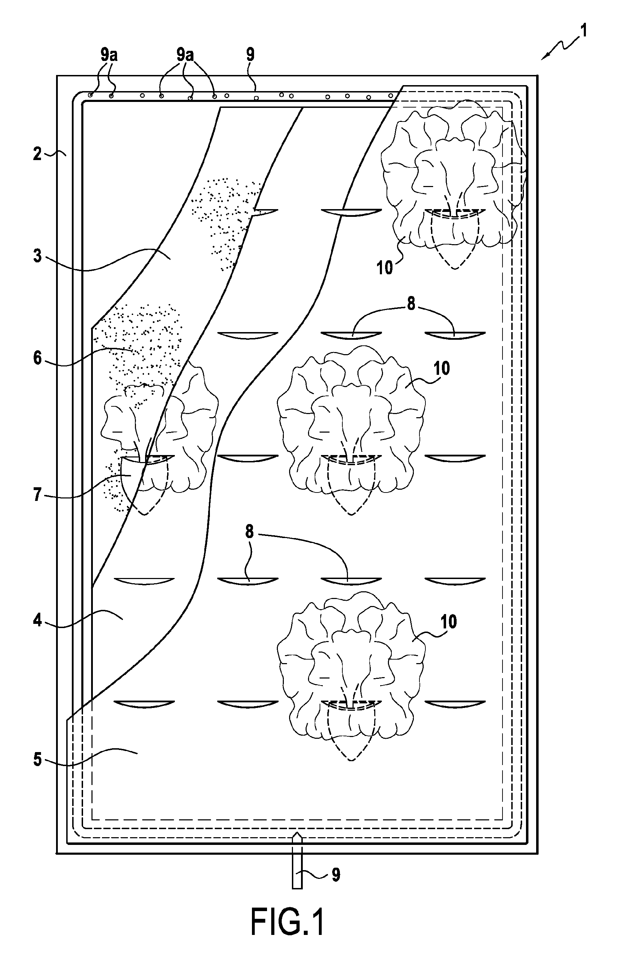

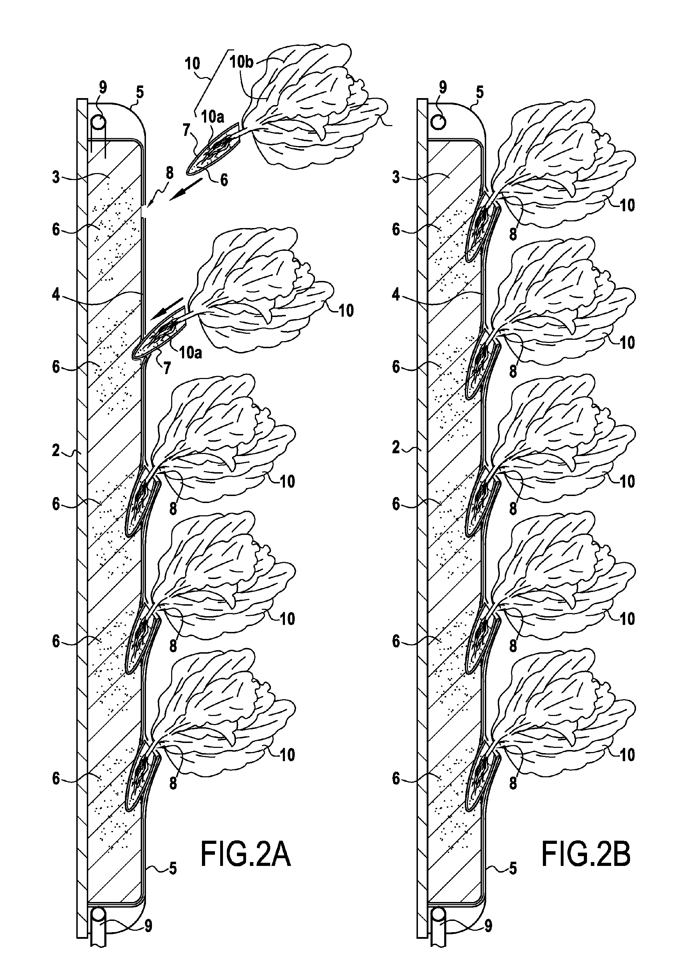

D'autres caractéristiques et avantages de la présente invention apparaitront à la lumière de la description détaillée du mode de réalisation qui va suivre en référence aux figures 1 à 5 suivantes dans lesquelles :
- la figure 1 représente une vue de face et partiellement en éclaté, pour en montrer les différentes couches, d'un dispositif de culture de végétal selon l'invention sous forme de panneau modulaire qui peut s'utiliser seul ou en réseau en reliant différents panneaux entre eux.
- les figures 2A et 2B sont des vues en coupe verticale d'un panneau de la figure 1 avant et en cours d'implantation des poches dans lesquelles ont été élevés des végétaux 10 (figure 2A) et après implantation des poches (figure 2B) dans des fentes 8 réalisées dans certaines couches du substrat de culture accolées au support solide 2 formant ledit panneau.

- la figure 3 représente un agrandissement montrant la manière dont est implantée la poche 7 qui est introduite entre lesdites première couche 3 et deuxième couche 4 en passant par une fente 8 réalisée dans les deuxième et troisième couches et qui s'enfonce dans ladite première couche de substrat 3.
- Les figures 4A et 4B sont des vues en coupe de côté (figure 4A) et en vue de face (figure 4B) d'une poche de confinement de végétaux.
- La figure 5 est une vue d'un panneau modulaire inséré dans un cadre support de présentation équipé d'un bac de rétention en partie inférieure.

Le panneau de culture 1 représenté sur les figures permet une culture en hydroponie c'est-à-dire une culture de plantes hors sol qui consiste à nourrir les racines des plantes qui se trouvent dans un substrat avec une solution aqueuse nutritive. Le substrat permet à la plante d'avoir un meilleur accès à l'oxygène, à l'eau ainsi qu'aux éléments nutritifs. Grâce à ce principe, la plante est poussée au maximum de son potentiel de croissance.

Le système de dispositif de culture de végétal en hydroponie selon la présente invention qui va être décrit ci-après est particulièrement avantageux car il permet une mise en place et un entretien simple et rapide et économe en eau et en énergie, d'une part. D'autre part, il optimise les conditions de croissance et donc de survie de la plante en culture.

Le dispositif de culture du végétal décrit ci-après permet en particulier une meilleure adaptation des plantes du fait de la mise en oeuvre de poches de pré culture comme il sera explicité ci-après.

Le panneau de culture 1 selon l'invention est destiné à être positionné verticalement ou sensiblement verticalement. Ces panneaux 1 peuvent s'utiliser indépendamment ou en réseau, étant modulables et adaptables pour tout type de surfaces planes ou courbes contre lesquelles on peut les adapter aussi bien à l'intérieur qu'à l'extérieur d'un bâtiment, ils peuvent également constituer en eux-mêmes une paroi végétale.

Le panneau modulaire selon l'invention 1 comprend une pluralité de couches superposées appliquées sur un support solide plan 2. Le support solide plan 2 est formé à partir d'un matériau imputrescible étanche ou à tout le moins recouvert d'un matériau imputrescible étanche. Il doit être suffisamment solide pour supporter les autres couches constituant le substrat de culture proprement dit. De préférence, le panneau est réalisé en matériau rigide recyclable et léger tel que du PVC expansé ou du polypropylène expansé. Il peut aussi être constitué d'un même matériau synthétique solide et souple tel qu'un polypropylène constituant une bâche.

Le support solide 2 est recouvert d'une première couche 3 de substrat de culture à base de fibres de chanvre et de coton recyclé agglomérées par un liant organique à base de liant polyester.

Cette première couche est destinée à recevoir l'implantation des racines 10a des végétaux 10 pénétrant en son sein lors de leur développement d'une part et d'autre part la solution nutritive captée principalement de la deuxième couche qui sera décrite ci-après. La première couche 3 conserve une texture au moins partiellement aérée avec des structures évidées au moins partiellement aérées en dépit de l'absorption de la solution aqueuse nutritive depuis la deuxième couche. Les racines 10a pompent la solution nutritive incluse dans le substrat 3 de part la pression osmotique qu'elles exercent.

La première couche de substrat 3 peut se présenter elle-même sous forme d'un panneau tel que les panneaux semi-rigides FLORAPAN+® commercialisés par la société Saint Gobain Isover France. Ces panneaux présentent une épaisseur de 40 à 100 mm, largeur de 60 cm et longueur de 120 cm. Les panneaux FLORAPAN+® sont constitués de fibres de chanvre, et de coton recyclé et de liant organique polyester chargés d'assurer la tenue mécanique du produit. La teneur en fibres de coton est d'environ 40% en poids. La teneur en liant organique à base de polyester est environ 15 à 20% en poids. On peut également utiliser une laine de chanvre telle que commercialisée par la société Technichanvre obtenue par effilochage et expansion de fibres de chanvre de fabrication exclusivement mécanique. Ce substrat de complexe fibreux aggloméré est traité contre les attaques fongiques pour éliminer les risques de dégradation dans le temps. D'autre part, de par sa texture aérée, il présente des propriétés d'isolation thermique et phonique remarquables.

Le substrat fibreux de la première couche 3 a la propriété d'absorber plus de 2 fois son poids à sec en eau. En revanche, de par la propriété des fibres de chanvre, son humidification est relativement lente de sorte qu'une grande quantité d'eau serait perdue si on cherchait à l'hydrater par une simple circulation d'eau à travers sa structure. On rappelle ici que les fibres végétales sont des fibres creuses et que leurs propriétés d'hydrophilie sont principalement dues à leur capacité d'absorber par percolation de l'eau à l'intérieure desdites fibres creuses. La plus grande durée d'hydratation des fibres de chanvre par rapport notamment aux fibres de coton peut être due aussi à une plus grande longueur des dites fibres entre autre, sans compter des variantes de composition moléculaire éventuelles.

Le substrat fibreux de la première couche 3 est en outre complémenté par un additif ou adjuvant 6 absorbeur d'eau et des éléments nutritifs fertilisants qu'il contient, sous forme de produits pulvérulents ou granulaires ou particulaires en vrac que l'on localise plus particulièrement dans les zones du substrat fibreux de la première couche 3 destinées à recevoir des plantations. De tels adjuvants appelés rétenteurs d'eau ou agents mouillants sont bien connus de l'homme de l'art. On pourra notamment utiliser le produit commercialisé sous la marque FERTISORB M® ou AQUAMIX® (de la société Fertil SA France). Ces composés ont la capacité d'absorber plus de 200 fois leur poids en eau et d'augmenter ainsi considérablement la réserve utile aux végétaux en fixant les éléments fertilisants et les rendant disponibles pour les plantes au cours de leur développement limitant ainsi l'effet de lessivage des éléments nutritifs et permettant de diminuer fortement les arrosages et par conséquent impliquant une économie d'énergie. Les fréquences d'irrigation peuvent être réduites de 50% par mise en oeuvre de ces adjuvants absorbants rétenteurs d'eau. Grâce à eux l'eau et les éléments nutritifs sont en permanence disponibles dans la zone racinaire en quantité accrue pour une absorption optimale par les racines de la plante.

Cet agent absorbant ou agent mouillant améliore l'homogénéité de la répartition de l'eau au sein du substrat fibreux de la première couche 3. L'homme de l'art connaît ce type d'agent mouillant pour l'appliquer sur des terreaux. En effet, une fois sec, les terreaux ont du mal à se ré-humecter. Ce type d'agent mouillant prévient et corrige ce phénomène en permettant à l'eau de pénétrer plus facilement dans tout le volume du terreau. Il en va ici de même pour ladite première couche 3 de substrat fibreux aggloméré.

Ladite première couche 3 de substrat fibreux complexe de fibres agglomérées est recouverte d'une deuxième couche 4 appelée couche d'irrigation constituée d'un feutre de fibres de coton recyclé imputrescible commercialisé sous la marque AQUANAPPE la qualification de feutre géotextile. Ce feutre présente une épaisseur de 1 à 5 mm et une densité de 100 à 500 gr/m², soit très supérieure à celle de FLORAPAN® (20 à 50 kg/m³).

En pratique, en l'absence d'additif absorbeur d'eau la première couche de FLORAPAN® et la deuxième couche d'AQUANAPPE présentent une capacité massique intrinsèque d'absorption sensiblement identique d'environ 4 fois leur poids en eau.

Dans les réalisations antérieures notamment dans le brevet FR2634971, ce feutre de fibres de coton recyclé imputrescible servait de substrat de culture dans lequel les racines des plantes puisaient l'eau et les sels minéraux nutritifs, ledit substrat de culture étant alimenté de la solution nutritive s'écoulant en son sein par gravité et capillarité. Mais le volume d'eau perdu engendré par les arrosages fréquents nécessaires était important. D'autre part, ce feutre AQUANAPPE isolait et protégeait peu les racines notamment en cas de température hivernale.

Selon la présente invention, ladite deuxième couche 4 est essentiellement mise en oeuvre pour absorber l'eau rapidement dans le dispositif de culture végétal selon l'invention et diffuser celle-ci et les éléments nutritifs qu'elle contient dans le substrat fibreux de la première couche 3.

Selon la présente invention, les fonctions de rétention d'eau d'une part et d'autre part d'accueil des racines dans une structure aérée pour leur permettre de puiser l'eau et les sels minéraux nutritifs sont attribuées à deux couches distinctes à savoir respectivement la deuxième couche 4 pour la fonction d'irrigation d'alimentation et ladite première couche 3 pour la fonction d'accueil des racines, stockage de la solution nutritive et restitution de celle-ci aux racines des plantes sous la pression osmotique de ces dernières.

Cette séparation des deux fonctions et leur optimisation est permise grâce aux propriétés distinctives desdites première et deuxième couches. En effet, ladite deuxième couche de fibres de coton de type AQUANAPPE a la propriété de s'imbiber plus rapidement en eau. Inversement, les fibres de chanvre présentent une mouillabilité moindre à savoir qu'en pratique, la première couche de fibres de chanvre s'hydrate sur une durée plus longue si elle est alimentée directement par écoulement de la solution nutritive par gravité et capillarité en leur sein. En revanche, si le substrat fibreux de la première couche 3 est alimenté par simple capillarité ou percolation par mise en contact avec ladite deuxième couche 4 de feutre de fibres de coton hydratée, l'hydratation du substrat fibreux de la première couche 3 est plus homogène sur toute sa surface, ladite deuxième couche 4 ayant la propriété avantageuse essentielle d'une diffusion homogène sur toute sa surface permettant d'hydrater de façon homogène ladite première couche.

La première couche de fibres de chanvres s'hydrate plus lentement que la deuxième couche d'AQUANAPPE mais elle est capable de contenir une quantité d'eau plus importante d'une part et d'autre part elle sèche moins vite et restitue l'eau aux racines de façon plus prolongée et plus progressive que ladite deuxième couche d'AQUANAPPE.

Dans un autre mode de réalisation, on peut aussi appliquer sur le feutre AQUANAPPE de la deuxième couche 4 un agent mouillant du type de ceux connus de l'homme de l'art notamment commercialisé sous la marque AQUAMIX.

Ladite deuxième couche 4 est revêtue sur sa face externe d'un tissus synthétique semi-hermétique 5 de type film de polypropylène micro-perforé de 100 à 500 gr/m² de préférence armé. Ce tissu synthétique 5 apporte les fonctions de perméabilité à l'air tout en constituant une imperméabilité relative par rapport à l'évaporation de l'eau (fonction de pare-vapeur) tout en pouvant apporter une finition esthétique et surtout en protégeant les racines de l'exposition directe aux UVA.

Enfin, ce tissu synthétique 5 apporte un soutien mécanique aux première couche 3 et deuxième couche d'irrigation 4, pour le soutien des végétaux 10 dont les racines 10a sont implantées en leur sein comme il sera exposé ci-après.

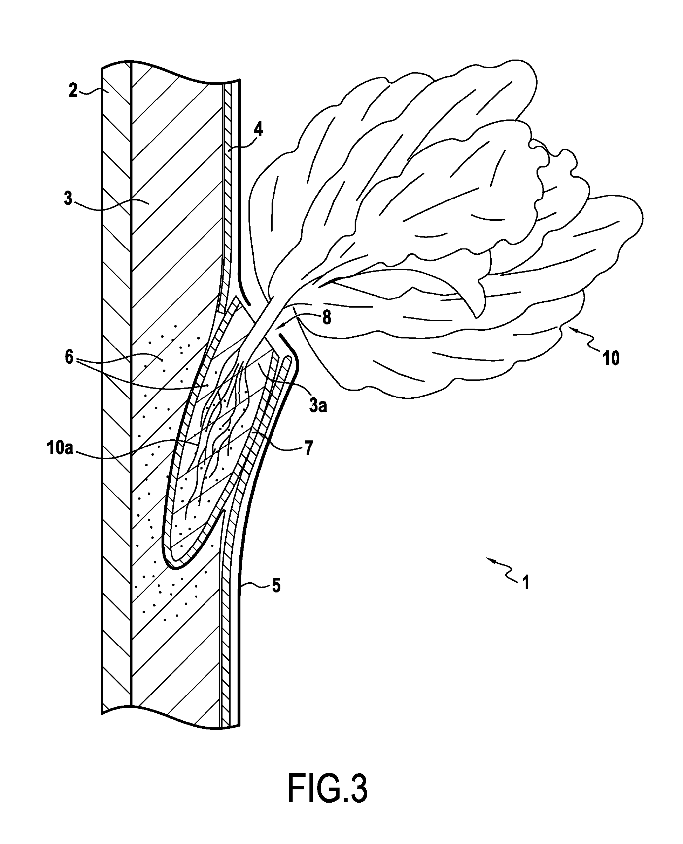

Dans le mode préféré de réalisation de l'invention, les végétaux sont implantés dans le substrat de culture filtreux de la première couche 3 de la manière suivante. On réalise des poches 7 ouvertes en leur partie supérieure 7b constituées d'une enveloppe 7a de tissu perméable de préférence de même matériaux que ladite deuxième couche de feutre de fibres de coton imputrescible de type AQUANAPPE pliée en forme de cône et dans lequel est incorporé du matériau fibreux 3a de préférence identique à celui de ladite première couche 3 et de l'additif absorbant rétenteur d'eau 6. Les racines 10a des végétaux sont introduites à l'intérieur de ces poches dans lesquelles elles sont cultivées préalablement à leur implantation dans le dispositif de culture végétal 1 afin d'acclimater les racines dès l'origine avec leurs conditions finales de culture lorsqu'elles seront implantées dans le substrat de la première couche 3. On réalise en effet des fentes 8 de 5 à 10 cm découpées à la surface desdites troisième couche de finition 5 et deuxième couche d'irrigation 4, régulièrement espacées à la surface du panneau à raison de 25 à 35 fentes par m² de manière à pouvoir y introduire des poches formés par les poches 7 remplies dudit substrat fibreux 3a et adjuvant 6 contenant également les racines 10a de végétaux 10. Les poches 7 sont intercalées entre lesdites première et deuxième couches et viennent s'enfoncer dans ladite première couche et la déformer comme représenté sur la figure 3. On comprend ainsi que le tissu de finition 5 est avantageusement réalisé en un tissu présentant une armature quadrillée de façon à améliorer le soutien mécanique des végétaux 10 ainsi implantés.

On introduira des produits absorbants du type FERTISORB® et/ou AQUAMIX® décrit ci-dessus dans la première couche de chanvre au niveau des fentes et dans les poches 7 dans les quantités prescrites.

Ce mode de plantation des végétaux dans le substrat de culture 3 assure une meilleure adaptation et un développement des végétaux améliorés en limitant le traumatisme de la transplantation et en augmentant de fait le taux de reprise des plantes. Ce mode de transplantation offre également la possibilité de remplacer chaque plante indépendamment à volonté notamment pour l'entretien et la rénovation des végétaux si nécessaire plus facilement que dans les réalisations antérieures connues et en tout état de cause sans changer l'ensemble du panneau.

Un tuyau d'arrosage 9 contourne le panneau 1 pour permettre l'alimentation en eau. Plus précisément, la solution nutritive peut être stockée à l'extrémité inférieure du panneau dans un bac de rétention 11b d'un cadre 11 décrit ci-après ou dans une cuve enterrée et pompée à l'aide d'un pompe non représentée pour circuler à travers le tuyaux 9 remontant en haut du dispositif, ledit tuyau 9 était perforé 9a sur la partie du tuyau maintenue à l'extrémité supérieure du panneau et passant entre lesdites deuxième et troisième couche de manière à pouvoir irriguer par gravité et capillarité ladite deuxième couche 4 avant de retourner dans la cuve de stockage ou bac de rétention inférieur 11b. Le fonctionnement de l'alimentation en eau est commandé par un programmateur réglé en fonction de l'exposition du panneau 1 de préférence la pompe hydraulique utilisera l'énergie solaire pour son fonctionnement. La solution, l'eau et ses éléments nutritifs, traverse par gravité ladite deuxième couche de feutre 4 et imbibe par diffusion homogène pour toute sa surface de substrat fibreux de la première couche 3. Le bac de rétention 11b d'une part récupère le surplus en eau après la saturation en eau du substrat fibreux de la première couche 3 et d'autre part stocke l'eau fertilisée pour les arrosages suivants. Du fait que le circuit d'arrosage est en circuit fermé, on évite le gaspillage de l'eau et la pollution du milieu naturel.

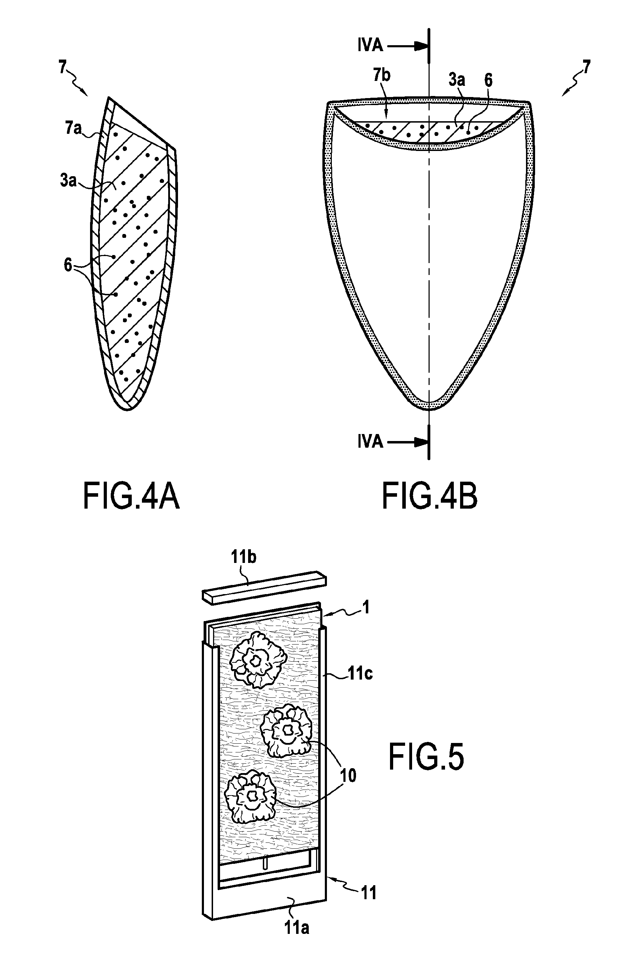

Sur la figure 5, on a représenté un panneau modulaire de dispositif de culture végétale 1 selon l'invention inséré dans un cadre support de présentation 11 comprenant en partie basse un bac de rétention 11a. Sur la figure 5, le panneau modulaire 1 est en cours d'insertion le long des éléments latéraux 11c en forme de glissière du cadre 11, lesdits éléments latéraux 11c étant destinés à être chapeautés à leurs extrémités par un élément supérieur 11b formant un cadre rectangulaire de présentation dudit panneau 1.

De préférence, on peut mettre en oeuvre une sonde d'humidité apte à détecter la teneur en eau de ladite première couche et ainsi déclencher la mise en oeuvre de la pompe et l'arrosage en cas de manque d'hydratation de ladite première couche détecté par la sonde.

Ainsi en pratique un panneau selon l'invention tel que décrit ci-dessus présente des propriétés d'isolation thermique avec un coefficient d'isolation thermique de 0.04w/m x K (w x m⁻¹ x K⁻¹) et fonctionne avec des consommations d'eau et d'énergie réduites par rapport à un dispositif de même configuration mais dépourvu de ladite première couche.

Plus particulièrement, le dispositif de l'invention décrit ci-dessus nécessite des arrosages de 15 minutes toutes les 48 heures tandis qu'un dispositif similaire sans première couche de chanvre et sans additif absorbeur requiert des arrosages d'1 minute toutes les 4 minutes.

## Revendications

1. Dispositif de culture végétale (1) en hydroponie multicouche comprenant au moins une première couche (3) de matériau fibreux comprenant un premier type de fibres dénommées premières fibres dont au moins une de ses 2 faces est appliquée sur et directement en contact avec une face d'au moins une deuxième couche (4) de matériau fibreux comprenant un deuxième type de fibres dénommées deuxièmes fibres, ladite deuxième couche coopérant avec des moyens d'alimentation (9) en eau, et ladite première couche étant plus épaisse et plus aérée à sec que ladite deuxième couche et présentant une capacité d'absorption d'eau supérieure à celle de la deuxième couche, de préférence la densité volumique à sec de la dite première couche étant inférieure à celle de ladite deuxième couche.

2. Dispositif de culture végétale selon la revendication 1 **caractérisé en ce que** ladite première couche présente une rigidité supérieure à celle de ladite deuxième couche.

3. Dispositif de culture végétale selon la revendication 1 ou 2 **caractérisé en ce que** lesdites premières et deuxièmes fibres desdites première et respectivement deuxième couches comprennent des fibres végétales.

4. Dispositif de culture végétale selon l'une des revendications 1 à 3 **caractérisé en ce que** :
- lesdites premières fibres sont plus rigides que lesdites deuxièmes fibres, et/ou
- lesdites premières fibres de la première couche sont liées entre elles par un liant.

5. Dispositif de culture végétale selon l'une des revendications 1 à 4 **caractérisé en ce que** :
- ladite première couche (3) est constituée d'une nappe semi-rigide de mélange de fibres végétales enchevêtrées de préférence liées entre elles par un liant organique, synthétique ou naturel, comprenant des dites premières fibres choisies parmi des fibres de chanvre, bambou, coco, kenaf, jute, lin, abaca, sisal et ramie, et
- ladite deuxième couche (4) est constituée d'une nappe de matériau fibreux non tissé aiguilleté de fibres comprenant des fibres de coton ou des fibres de coton en mélange avec des fibres synthétiques de préférence des fibres de polypropylène.

6. Dispositif de culture végétale selon l'une des revendications 1 à 5 **caractérisé en ce qu'**au moins une de ses 2 faces, de préférence une face de ladite deuxième couche, est revêtue d'une troisième couche pare-vapeur (5) perméable à l'air de préférence constituée d'un tissu synthétique micro perforé de préférence encore un tissu armé.

7. Dispositif de culture selon l'une des revendications 1 à 6 **caractérisé en ce que** ladite première couche comporte un additif de rétention d'eau (6) en vrac sous forme de grains ou en poudre introduit au moins localement dans les interstices vides entre les fibres.

8. Dispositif de culture selon l'une des revendications 1 à 7 **caractérisé en ce qu'** il comporte des poches (7) ouvertes (7b) contenant ou aptes à contenir lesdites racines (10a) des végétaux, lesdites poches étant insérées à travers des découpes (8) réalisées dans lesdites deuxième et le cas échéant troisième couches, lesdites poches étant intercalées entre lesdites première et deuxième couches, lesdites poches comprenant un substrat (3a) de culture végétal, lesdits végétaux étant de préférence pré cultivés dans lesdites poches avant l'insertion desdites poches dans lesdites découpes.

9. Dispositif de culture végétale selon la revendication 8 **caractérisé en ce que** l'enveloppe (7a) desdites poches (7) ouvertes est constituée à partir du même matériau fibreux que ladite deuxième couche et comporte comme substrat de culture un même matériau que le matériau fibreux constitutif de la première couche, avec de préférence en son sein un additif de rétention d'eau en vrac sous forme de grains ou en poudre, de préférence encore le même que ladite première couche.

10. Dispositif de culture végétal selon l'une des revendications 1 à 9 **caractérisé en ce qu'**il comprend des moyens d'alimentation en eau (9) fixés sur une surface d'un support (2) verticale contre laquelle est appliqué ladite première couche, lesdits moyens d'alimentation en eau étant aptes à alimenter en eau la partie supérieure de ladite deuxième couche et permettre ainsi une circulation de l'eau par gravité au sein de ladite deuxième couche et éventuellement au sein de ladite première couche, l'eau étant récupérée dans un réservoir (11a) disposé en partie inférieure ou dessous lesdites première et deuxième couche et ledit réservoir coopérant avec des moyens de pompage assurant la circulation en circuit fermé de l'eau entre ledit réservoir et lesdits moyens d'alimentation en eau dans la partie supérieure de ladite deuxième couche, et éventuellement dite première couche, lesdits moyens d'alimentation en eau comprenant de préférence un tuyau périphérique, perforé au niveau de la partie supérieure au moins de ladite deuxième couche.
